# EUROPEAN PATENT SPECIFICATION

(11) **EP 1 492 269 B1**
(45) Date of publication and mention of the grant of the patent: **14.02.2007**
(21) Application number: 03425413.6
(22) Date of filing: 25.06.2003
(51) Int. Cl.: H04L 12/28

(54) **Bandwidth allocation for the uplink of a point-to-multipoint radio system with adaptive coding and modulation of physical channels (adaptive PHY mode)**
Bandbreitenzuteilung für die Aufwärtsverbindung eines Punkt-zu-Multipunkt Funksystems mit adaptiven Kodierung und Modulation von physikalischen Kanäle (adaptiven PHY Modus)
Allocation de largeur de bande de la liaison montante dans un système radio point à multipoint adaptif en codage et modulation des canaux physiques (adaptif en mode PHY)

(43) Date of publication of application: 29.12.2004
(73) Proprietor: Siemens S.p.A., 20126 Milano (IT)
(72) Inventor: Cavalli, Giulio, 20159 Milan (IT); Santacesaria, Claudio, 20100 Milan (IT)

(56) References cited:
- EP-A- 1 317 110
- WO-A-02/05453
- "Broadband Radio Access Networks (BRAN); HIPERACCESS; DLC protocol specification" ETSI TS 102 000 V1.3.1, [Online] December 2002 (2002-12), pages 20-94, XP002262772 Retrieved from the Internet: <URL:http://www.etsi.org> [retrieved on 2003-11-25]
- CAVALLI, G.; SANTACESARIA, C.: "MAC Protocol for a wireless Point to Multi-Point ATM Access System" EUROPEAN WIRELESS 2002 CONFERENCE, [Online] 26 February 2002 (2002-02-26), pages 1-5, XP002262773 Florence, Italy Retrieved from the Internet: <URL:http://www.ing.unipi.it/ew2002/procee dings/pmp001.pdf> [retrieved on 2003-11-25]
- "Broadband Radio Access Networks (BRAN); HIPERACCESS; PHY protocol specification" ETSI TS 101 999 V1.1.1, [Online] April 2002 (2002-04), pages 13-52, XP002262774 Retrieved from the Internet: <URL:http://www.etsi.org> [retrieved on 2003-11-25]

## Description

### FIELD OF THE INVENTION

The present invention relates to the field of point-to-multipoint radio systems, and more precisely to a medium access control method in point-to-multipoint (PMP) radio systems adopting either half-duplex or full-duplex peripheral stations with adaptive PHY mode. The present invention is further related to a PMP system operating in accordance with the relevant MAC method.

### BACKGROUND ART

As well known in the art, point-to-multipoint radio systems are characterized by the presence of a master station and a certain number of peripheral stations, also called slaves. Point-to-multipoint radio communications are standardized by relevant ETSI specifications, e.g.: TS 102 000 describes in great details the Data Link Control layer (DLC) and TS 101 999 the physical layer (PHY).

According to the aforementioned standards, the transmissions from the master to the peripheral stations are performed with a broadcast downstream channel, while the transmissions from peripheral stations to the master are performed with an upstream channel (downstream and downlink, so as upstream and uplink are synonyms). To properly realize the transmission from many peripheral stations to the single master on a single channel, the point-to-multipoint system needs a solution to allow effective sharing of the single upstream communication channel and to avoid that each peripheral station, during transmission, could interfere with others. The solution for sharing the physical mean is generally based on time division multiple access (TDMA). Adopting TDMA the single communication channel used to transmit from the peripheral stations to the master is divisible in bursts and each burst can be reserved to the transmission from a single peripheral station activated in that particular burst by a message, called 'grant', sent by the master on the downstream channel by means of an "upstream map". The grant message specifies the starting instant of the transmission and the length of the burst (either directly or indirectly), that is the duration of the transmission. Two duplexing modes are known for dividing the upstream from the downstream channel, namely: time division duplexing (TDD) or frequency division duplexing (FDD). With FDD the upstream transmissions is carried out on a different frequency band than the downstream one, while with TDD the frequency band is the same but different time-intervals occur. The present invention concerns the only FDD approach.

Downstream and upstream channels are divided in frames of the same duration but the second is delayed by a predetermined time delay called frame offset (FO). Downstream frames are characterized by a preamble, followed by a control zone where generic information broadcast to all the peripheral stations are inserted, containing the downstream and upstream maps where information about the structure of the current downstream frame and the upstream frame, followed by data regions where data to be sent to the peripheral stations are inserted. The control zone includes the grant messages addressed to the peripheral stations. The frame offset allows the peripheral to read the control information at the begin of the downstream frame and predispose its uplink transmission accordingly.

Medium Access Control (MAC) functionality, located within the master, takes care of generating these 'grant' messages in order to satisfy bandwidth requirements of peripheral stations. MAC functionality has to be able also to guarantee that bandwidth assigned to each peripheral station fulfils the quality of service (QoS) parameters of each connection belonging to different classes of traffic. Many MAC protocols, with different performances and characteristics, have been described in the known art, for example, the one described in the European Patent application: EP 1017244 A1, titled: "Method and system to assign transmission bandwidth in both radio and PON (Passive Optical Network) ATM (Asynchronous Transfer Mode) PMP (Point-to-Multipoint) systems", in the name of the same Applicant. An essay of this patent application is included in the article of G. Cavalli and C. Santacesaria, titled: "MAC Protocol for a wireless Point to Multi-Point ATM Access System", published on European Wireless 2002 Conference; 26 February 2002, Florence, Italy. According to the method of the citations, data traffic is subdivided into connections, the connections characterised by the same class of traffic are aggregated into "connection aggregates" with different priority, to each connection aggregate a queue is associated within each peripheral station to store packets also called protocol data units (PDU) until the transmission of the same is enabled, and bandwidth is assigned in uplink through emission of Grants by the Master Station towards the Peripheral Stations in order to:
- pre-allocate a certain portion of total bandwidth in static modality to various Peripheral Stations on the basis of information about active connections but without considering the status of the queues in the various Peripheral Stations,;
- elaborate instantaneous bandwidth requirement information or "Requests" sent by Peripheral Stations to the Master Station and distribute bandwidth not assigned with previous static technique according to two additional modalities jointly defined dynamic bandwidth allocation mode including: guaranteed dynamical bandwidth and available dynamic bandwidth.

By the light of the description, the method described above is implementable with uplink TDMA frames subdivided in timeslots of fixed length each including an ATM cell transmitted, in turn, by the granted peripherals. The number of timeslots in a frame and their duration are both constant, so that the traffic capacity of the frame is fixed. The grant is always referred to a well precise timeslot of the uplink frame. If for example a peripheral shall transmit 4 ATM cells, the master assigns 4 grants to it for the transmission in 4 distinct timeslots, not necessarily consecutive. Other known TDMA systems for transmitting packet data, e.g.: GPRS, 3G UTRAN CDMA, etc., have this type of rigid MAC structure based on fixed length timeslots.

### OUTLINED TECHNICAL PROBLEM

"Adaptive PHY mode" is a central feature of the new generation point-to-multipoint radio systems. With term "PHY mode" we mean the combination of modulation and FEC (Forwarding Error Check). Each PHY mode is characterized by a different throughput and a different robustness. With the term "adaptive PHY modes" we mean that the transmitting stations, either master or peripherals, are commanded to use a PHY mode for the current data transmission selected among a set of possible ones. Data within an upstream burst shall be transmitted with only one PHY mode.

According to the mentioned standards, the length of the uplink bursts is no more fixed but made variable by the introduction of the PHY mode. For example 1,421 symbols are needed for the transmission of 4 ATM cells with the lowest PHY mode, while only 472 symbols are needed if the highest PHY mode is selected. Furthermore, due to the adaptive PHY modes, the traffic capacity of each frame in no more fixed but variable with the PHY modes assigned to the peripherals dynamically. Let us consider the standard frame 1 ms long for the transmission of 22,400 modulation symbols; in case all the peripherals are transmitting ATM cells with the lowest PHY mode, 60 cells are transmitted, while with the highest PHY mode the transmitted ATM cells are near 200.

The old MAC protocols are not suitable to exploit the opportunities offered by the latest standardisation, this because the relevant scheduler is designed to assign timeslots of fixed length to the granted peripherals and to consider constant the traffic capacity of the frame. A goal of a smart MAC protocol suitable to be implemented in point-to-multipoint radio systems, but also in GPRS, UMTS, etc., is that of keeping the measured QoS constant making the bandwidth variable in time. Contrarily to the old MACs having the only opportunity of varying the number of granted timeslots to adapt the QoS requirements, an additional opportunity exists with the introduction of adaptive PHY mode techniques, which can pursue the same aim by varying the actual PHY mode. Besides, the burst of variable length with the granularity of one modulation symbol allows a fine calibration of the granted bandwidth to adapt the QoS variability, contrarily to the burst of fixed length spanning the discrete steps one timeslot.

The latest standardisation only indicates what the scheduler has to do and provides: the gross structure of the downstream frame, the type of messages at the peripheral stations disposal to request bandwidth, the structure of the polling message and of the grant message, etc. How the scheduler has to operate in the specific, but more in general the MAC protocol, is a matter left open to proprietor's solutions.

An important question a new MAC has to give answer is the management of peripheral stations having the characteristic that they cannot transmit while receiving, and vice versa. This kind of peripheral stations are called half-duplex (or H-FDD because TDD stations are intrinsically half-duplex). More in general, the master station has to manage a mixed scenario with half-duplex and full-duplex peripheral stations that are both requesting bandwidth for transmission. The master station, giving grants to all the peripheral stations, shall take into account the nature of the stations, avoiding that the planned transmissions for H-FDD stations occur at the same time of reception.

With the old MAC protocols this type of problem is not dramatic for a scheduler design because, thanks to the fixed nature of the timeslots and the absence of adaptive PHY modes, it can easily plan the transmission intervals of the H-FDD peripherals everywhere in the frame playing attention not to grant a timeslot in use for the reception. This is not always true for a new scheduler that overcomes the rigid time assignment of the old granting strategy, leaving variable the time boundaries of the H-FDD transmissions, consequently.

The efficient management of the variable bandwidth due to the PHY mode together with the respect of the H-FDD prerogatives constitutes a difficult task for a MAC protocol.

### OBJECTS OF THE INVENTION

The main object of the present invention is that to indicate a MAC protocol in PMP radio systems able to efficiently elaborate the transmission requests from peripheral stations commanded with adaptive PHY mode and distributing the available bandwidth accordingly to the different QoS requirements in the respect of the new standardisation requirements, taking into account the simultaneous presence of two type of PHY-mode peripheral stations with FDD duplexing, namely: half-duplex and full-duplex.

### SUMMARY AND ADVANTAGES OF THE INVENTION

It is an object of the present invention to provide a new medium access control (MAC) method in a point-to-multipoint (PTM) radio system adopting either half-duplex or full-duplex peripheral stations (PS) with adaptive PHY mode, as disclosed in the relevant method claims.

It is an additional object of the present invention a PMP system operating in accordance with the MAC method, as disclosed in the relevant system claims.

The core of the MAC protocol of the present invention is an upstream scheduler which offers to the master station the opportunity to assign to each peripheral station a single transmission burst of variable length per frame with the minimum granularity of one modulation symbol with the assigned PHY mode, in order to adapt the assigned bandwidth to the instantaneous traffic conditions determined by the transmission requests from the peripherals and, in particular, guarantee a minimum bandwidth defined in the connection set-up phase.

In order to attain the above objects, the problem of the H-FDD peripherals is solved by the new MAC through the following steps:
- confining the downstream traffic addressed to the H-FDD peripherals into an initial part of the downstream frames;
- issuing grants to the H-FDD stations only for the transmission from an initial part of the upstream frame; and
- properly setting the frame offset of the upstream frames with respect to the downstream frames in a way that the two initial parts are not overlapped in time.

The maximum length of the initial part of the upstream frames devoted to the H-FDD transmissions is reasonably set proportionally to the amount of the half-duplex peripherals, and their traffic capacity, with respect to the amount and capacity of the full-duplex peripherals connected to the same master. The same occurs for the initial part of the downstream frames considering that this part is longer than the upstream because a control zone, generally depending on the total number of the peripherals, is also included. With this setting an H-FDD station transmitting data in upstream is prevented from receiving traffic in downlink. The capacity to manage the H-FDD peripherals with adaptive PHY mode by the new MAC will be better understood after than some peculiarities of the uplink scheduling are disclosed.

The upstream scheduler is based on modules. Each module is associated to a connection aggregate and it contains, for each peripheral station, the connection parameter information and the requested PDUs the peripheral station has to transmit for the associated connection aggregate. The first module schedules the traffic of the highest priority. The bandwidth for this connection aggregate is pre-allocated during connection set-up and the peripheral stations don't request bandwidth for connections belonging to this connection aggregate. The scheduler translates the bandwidth parameters of the connections belonging to each peripheral station in number of PDUs to be transmitted. The subsequent modules, one for each connection aggregate handled by the master station, schedule traffic based on the replies to the polling, or to the peripheral station requests by means of piggyback and poll-me bit, which are known mechanisms mentioned in the relevant standardisations and in some patent applications in the name of the same Applicant.

The scheduler's modules update the received information during connection set-up and then dynamically in consequence of the above mentioned bandwidth request mechanisms (polling, piggyback and poll-me bit). The number of PDUs that each peripheral station should transmit in each frame is obtained from said modules, and inserted in priority tables, one for each module. The scheduler obtains an upstream map table which contains, for each peripheral station, the cumulative symbols from all the connection aggregates that the peripheral station shall transmit within the next frame. The upstream map is obtained by scanning the priority tables row-by-row, starting from that table with highest priority in decreasing order, and accumulating the number of PDUs translated into the number of equivalent modulation symbols for the current transmission PHY mode. The scanning process for obtaining the uplink map discriminates between half-duplex and full-duplex peripheral stations and allocates the first ones in an upper zone of the upstream map and the second ones in a consecutive zone. The scanning of the priority tables for filling up the first zone is interrupted when either all the half-duplex peripherals are scanned or the sum of the modulation symbols coming from the half-duplex peripherals exceeds the number of symbols foreseen for that aim. The scanning of the priority tables for filling up the second zone is interrupted when either all the tables have been scanned for the full-duplex peripherals or the sum of all the modulation symbols granted for both type of peripherals exceeds the maximum number of symbols admitted in the frame. In the two cases the scanning of the priority tables restarts at next frame from that one with highest priority. After the uplink map table is completed, the master scans this table row-by-row and stores them sequentially in the control zone of the downlink frame. The granting of the peripherals complies with the sequence stored in the control zone. The master station doesn't specify in the grant which type of PDUs the peripheral station shall transmit, but the master simply communicates to the peripheral the right instant and duration of the transmission. The peripheral station, a generic one, is responsible for distributing the allocated upstream bandwidth in order to fulfil the service parameters negotiated during the connection set-up. The peripheral station is free to use the transmission opportunities to transmit data traffic belonging to whatever connection aggregates.

Differently from the old MAC of the previous citation, the novel MAC has the visibility of the whole frame. In this optic, the instantaneous traffic conditions are considered in the actual frame in order to provide grants for the next frame. Furthermore, due to the PHY mode and the variable length of the transmission burst, the scheduler takes advantages by issuing only one grant per frame to each peripheral for the transmission with the assigned PHY mode. Contrarily to the cited MAC of the prior art, the novel MAC issuing grants for cumulative bandwidth prevents the peripheral to be granted for each connection aggregate separately with consequent high probability of transmission from different slots of the frame. In this optic, the cumulative bandwidth assignment makes easier the confinement of the H-FDD bursts inside the initial non-overlapping zone of the upstream frame.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** shows a functional block representation of the point-to-multipoint radio system of the invention connected to an ATM network;
- **fig.2** shows three short bursts transmitted by three peripheral stations at the beginning of each upstream frame in reply to the polling;
- **fig.3** shows the piggyback field within the PDU header;
- **fig.4** shows the poll-me bit field within the PDU header;
- **fig.5** shows the uplink and downlink frames received/transmitted by the master station of the system of fig.1 and the corresponding frames received/transmitted by the H-FDD peripheral stations;
- **figures 6a, 6b,** and **6c** show modules and tables used by the scheduling process for uplink transmissions which belongs to the MAC protocol of the present invention.

### DETAILED DESCRIPTION OF AN EMBODIMENT OF THE INVENTION

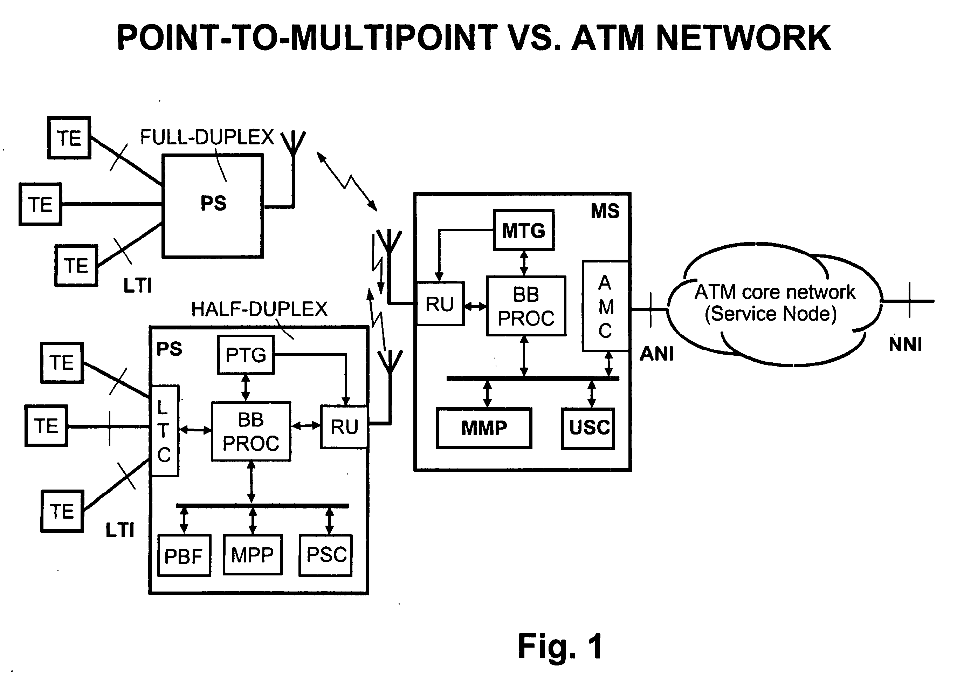

**Fig.1** shows a point-to-multipoint radio system constituted by a Master Station MS connected with several Peripheral Stations PS located in the territory around the MS, and each PS being in its turn connected to several Terminals TE by means of a physical link such as: twisted pair, cable, etc. The master station MS is connected to an ATM core network, preferably by optical link. The following standard interfaces are defined: Node Network Interface (NNI) between the ATM service node and other ATM nodes; ATM Network Interface (ANI) between the ATM service node and the master station MS; the radio interface is schematised by arrows; Local Terminal Interface (LTI) between the peripheral stations and the respective Terminals TE. The master station MS includes the following functional blocks: radio unit RU, master timing generator MTG, baseband processor BB PROC, MAC master processor MMP, uplink scheduler USC, and ATM medium circuits. Each peripheral station PS includes the following functional blocks: line terminal circuits LTC, radio unit RU, peripheral timing generator PTG, baseband processor BB PROC, MAC peripheral processor MPP, peripheral buffer PBF, and peripheral scheduler PSC. The various blocks inside the master MS and peripherals PS are interconnected by means of bi-directional internal buses, as indicated in the figure.

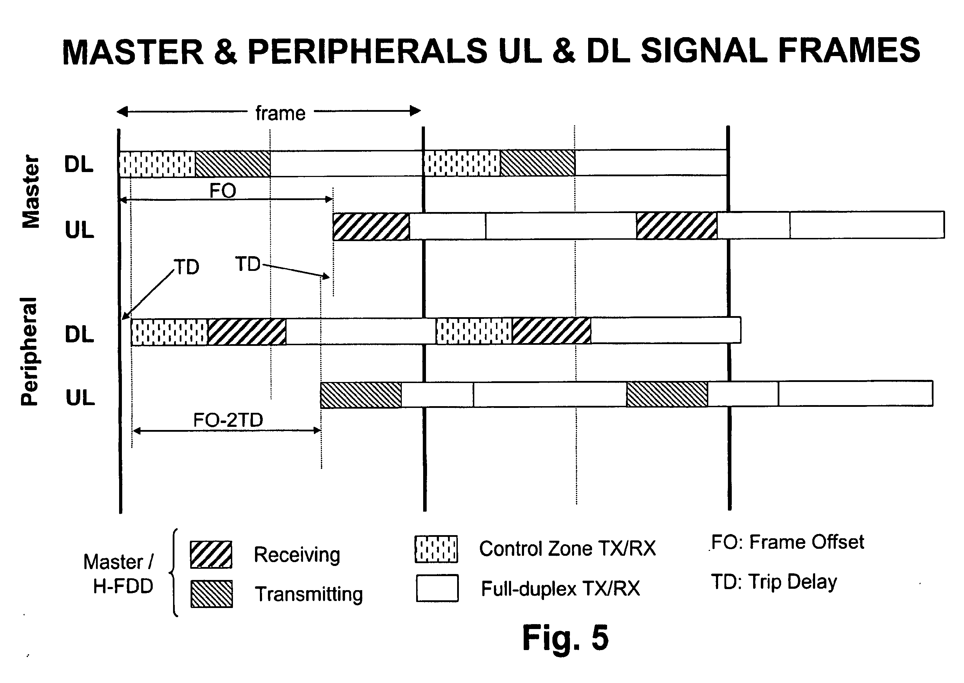

As the operation is concerned, and considering the peripheral station PS at first, the various terminals TE are apparatuses able to transmit and receive: either periodic real time (PRT), real time (RT), or non real time (nRT) signals through the LTI interface provided by the LTC circuits. The latter perform line adaptation, either A/D or D/A conversion, rate matching, either multiplexing or demultiplexing the baseband signals to / from the baseband processor BB PROC. The latter carries out all the baseband operations typical for transmitting and receiving with reliability on the radio channels, such as: TX / RX filtering, FEC-coding / decoding, interleaving / deinterleaving, scrambling / de-scrambling, ciphering / de-ciphering. The baseband transmission signal is forwarded to the radio unit RU which performs the selected modulation and converts it to IF. The modulated signal is then converted to RF and amplified before conveying it to the antenna for transmission. The received RF signal undergoes the opposite treatment to obtain a baseband reception signal at the BB PROC input. The timing generator PTG includes a stable clock generator (TCXO) and a frequency synthesizer in order to provide all those local oscillator signals and timing references for the correct temporisation of the radio unit RU and the other functional blocks inside the peripheral station PS. Temporisation of the radio unit RU involves transmission and reception by time division in correspondence of the assigned time slot or slots. As said in the introduction, a peripheral station adopting the FDD duplexing mode can be either full-duplex or half-duplex but in the latter case the timing circuit PTG is commended to avoid that the H-FDD stations receive and transmit in the same instant, as will be explained with reference to **fig.5**. The baseband processor BB PROC carries out several measures on the received signal, e.g.: transmission delay, power attenuation, quality (BER, BLER, C/I), etc, in order to support at the Master station the main operating procedures, such as Power control and adaptive PHY mode. Because of the non limiting embodiment is referred to an ATM network, a great simplification of the master MS descends by taking the exchanged PDU equal to the payload of one ATM cell. That is, the baseband processor BB PROC is further charged to execute a partial Segmentation and Reassembly (SAR) functionality of ATM. As known, every ATM cell is constituted by 5 octets of the Header plus 48 octets of payload (1 payload octet is reserved for SAR-PDU Header). By means of segmentation each higher layer protocol message originated by a given terminal TE is subdivided into numbered bursts of 47 octets generating a flux of 64 kbit/s. A dual mapping is executed for reassembling.

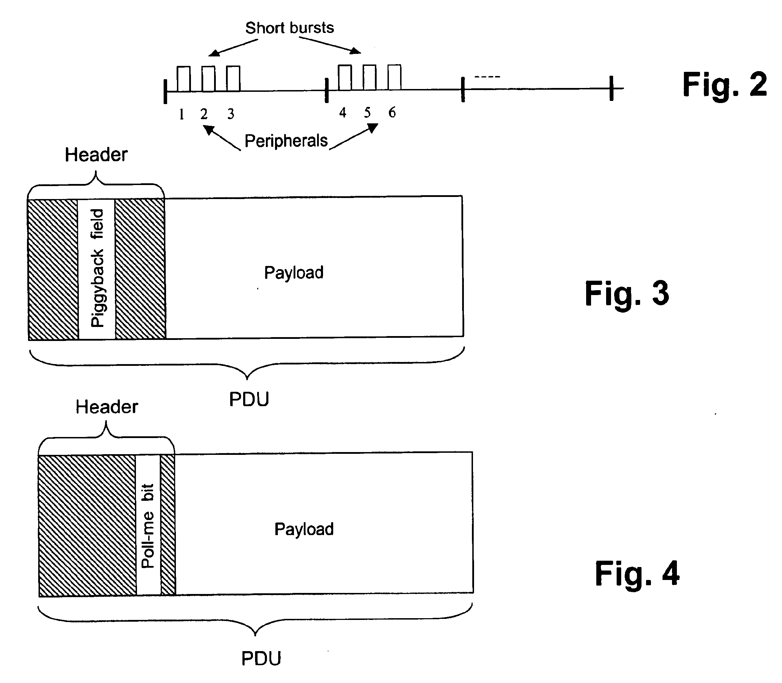

The processor MPP is a functional part of the baseband processor BB PROC deputed to perform operations of the MAC protocol charged to the peripheral station PS. In particular the MPP processor together with the peripheral scheduler PSC and the peripheral buffer PBF provides for:
- Receiving a poll signal from the master MS periodically during the time. Poll is a short granting message transmitted downlink by the master for commanding the transmission of a short signalling burst (mini-slot) in reply by the addressed peripheral.
- Sending to the master station, in response to the polling, a short signalling burst (mini-slot), as in fig.2, including a request to have assigned transmission opportunities; the request including detailed information about queue statuses, subdivided into connection aggregates. Connection aggregates are expressly foreseen in the MAC protocol relevant to the present invention. In particular, four connection aggregates, and relative queues are present, one for each of the following traffic class defined in the international standard specification: periodic real time (PRT), real time (RT), non real time (nRT) and best effort (BE). The four connection aggregates have different priority: PRT has the highest priority; RT has the second priority; nRT has the third priority and BE has the lowest priority. Each class of traffic is associated with one ATM class of traffic, respectively: constant bit-rate (CBR) associated to PRT, variable bit-rate real time (VBRrt) associated to RT, variable bit-rate non real time (VBRnrt) associated to nRT, and unspecific bit-rate (UBR+) associated to BE. The MPP processor of the peripheral station that receives a grant, based on its queue status, decides which queue/s has/have to transmit PDUs.
- Sending to the master station a Piggyback field (**Fig.3**) transmitted in the header of every upstream PDU in order to update at the master station the connection aggregate that the connection, transported in the PDU, belongs to. This is an implicit request for grant without waiting for the polling schedule. Piggyback message updates the aggregate queues after the relevant PDUs are transmitted to comply with the received grants.
- Scheduling the traffic of the various queues inside the peripheral buffer PBF.
- Transmitting polling requests (via Poll-me bit) originated by the internal scheduling. Fig.4 shows a Poll-me bit field transmitted in the header of every upstream PDU in order to request polling in advance, if the case is needed. The Poll-me bit feature is configurable during set-up phase of the connections. It's possible to associate the poll-me bit to a subset of the connection aggregates. In preferred embodiment of the invention the poll-me bit is associated only to the connection aggregate RT, that is associated to VBRrt of the ATM service class. In this way it's possible to mange efficiently VBRrt connections. In fact it's possible that a peripheral station has only CBR data to transmit (connection aggregate PRT), and as a consequence, the queue status, at the master station, indicates that the above mentioned peripheral has no traffic for connection aggregate RT to transmit. Then a PDU, belonging to VBRrt traffic, arrives at the peripheral station. All the grants sent to the peripheral are used for CBR traffic, since PRT has the highest priority. With the poll-me bit, transported within the header of every PDU, and transported in this case in the PDUs of the CBR traffic, it's possible to communicate to the master station that the VBRrt queue is not empty, without waiting the polling cycle. When the master receives a poll-me bit request from a peripheral station, the master sends to this peripheral a grant for a long burst. The peripheral doesn't wait until the polling cycle is over for update the queue statues at the master.
- Receiving and making operative the grant commands for UL transmissions. Each individual grant message includes the Peripheral Identifier PID#, the right instant of the transmission and the PHY mode that shall be used for the transmission, but which type of PDUs the peripheral station shall transmit is not specified. Upon a grant command the allocated upstream bandwidth is distributed among the various queues in the PBF buffer as scheduled by PSC.
- Receiving and making operative the PHY mode commands for adaptively transmitting / receiving on the radio channels.

Considering now the master station MS, the processor BB PROC carries out for all the connected peripheral stations those typical baseband operations already described for transmitting and receiving with reliability on the radio channels. The whole baseband transmission signal relevant to all the active peripherals stations is forwarded to the radio unit RU, which performs the selected modulation and converts it to IF. The modulated signal is then converted to RF and power amplified before conveying it to the antenna for transmission. The received RF signal undergoes dual treatments to obtain at the input of the processor BB PROC all the baseband reception signals of the active peripherals. Timing generator MTG is more complex than the companion PTG circuit and includes a more stable clock generator (TCXO). Temporisation of the radio unit RU involves multiplexing of the peripheral bursts into the downlink transmission frames for broadcasting in the cell, and time division reception by a plurality of fixed peripheral stations PS ranging different distances from the master MS. Both the numerical signals from the peripheral stations PS and the ATM signals from the ATM service node are inputted to the ATM medium circuits AMC. These circuits carry out typical operations of the ANI interface to obtain compatibility between digital fluxes at the two ends. In case the physical medium is optical cable, the circuits AMC include: multiplexers / demultiplexers, optical transmitters, and optical receivers. Besides, considering the direction MS → ATM at first, circuits AMC add the ATM header to the PDUs and route the resulting ATM cells on virtual channels and virtual paths mapped into the physical medium. In the opposite direction ATM → MS, circuits AMC analyse the ATM header of the received ATM cells for routeing the payload towards the 64 kbit/s flux associated to the corresponding peripheral stations.

The baseband processor BB PROC carries out the measure of frame delay and power and quality of the received signal in order to support the main operating procedures. Power control, frame synchronization of the incoming peripherals, and adaptive PHY mode are some examples. The MAC master processor MMP together with the scheduler USC are functional parts of the baseband processor BB PROC deputed to perform the MAC protocol in accordance with the present invention. MAC protocol uses messages that are sent in both directions to co-ordinate various functional entities (MS and PS): these messages and their interpretation are called MAC protocol. MAC protocol of current invention belongs to a category of protocols without collision, with centralised controller (MAC Master Processor) that is the only entity which can enable transmission of one or another PS. Centralised control allows, in fact, avoiding that, after independent decisions, collisions take place that is more than one PS transmit at the same time with the consequence of lost information. The MMP processor carries out the following operations:
- Polls the peripheral stations PS as indicated in **fig.2.**
- Receives from the peripheral stations PS (in reply to the polling) the requests to have assigned transmission opportunities, including in the requests detailed information about queue statuses subdivided into connection aggregates (mini-slots).
- Receives the polling requests originated by peripheral stations (poll-me bit).
- Schedules for every single peripheral station, as many queues as the number of connection aggregates.
- Transmits to the peripheral stations the grant commands for UL transmissions, based on the previous scheduling and either the full-duplex or half-duplex capability.
- Based on the quality measures performed by itself and the ones received from the peripheral stations, and further considering the requests for upstream bandwidth, transmits the PHY mode commands to the peripheral stations for adaptively transmitting / receiving on the radio channels.

Now the listed MS operations are better detailed. As the polling is concerned, as shown in fig.2, in every frame three peripheral stations are polled. The polling is performed giving a grant for the transmission of a short burst (mini-slot). If the system is dimensioned for 64 peripheral stations, since the frame duration in a PMP system is 1 ms (one millisecond), every peripheral station is polled at least every 22 ms (22 frames). The polling is performed only among the active peripheral stations and not among all the possible theoretical peripherals. This reduces the polling frequency when few peripherals are registered, in a particular deployment, at the master station. If only three peripheral stations are registered, every peripheral is polled every frame.

The master station shall properly handle H-FDD peripheral stations. This task is accomplished by MMP, USC, and MTG blocks. For this aim the master MS schedules downstream traffic addressed to the H-FDD peripherals in a first part of the downstream frame not exceeding a maximum length. The opportunities for the transmission are given to the H-FDD peripheral stations only in a first part of the upstream frame not exceeding another maximum length. By opportunely setting the frame offset it's impossible that a H-FDD peripheral station receives traffic while it's transmitting data in upstream. The portions of the downstream and upstream frames where it's possible to allocate H-FDD peripherals are inferred from **fig.5** that shows a possible timing valid for the master, the half-duplex, and the full-duplex peripheral stations.

With reference to **fig.5,** two consecutive downstream frames transmitted by the master station are depicted in the uppermost row (the first). The initial part of every frame, also called control zone, is reserved for management data traffic broadcasted to all the peripherals. The control zone contains the uplink map, thus all the grants to the peripheral stations. The control zone is variable in length but at last it appears not being longer than one quart of the downstream frame. All the peripheral stations shall listen the control zone. It's mandatory that H-FDD peripheral stations don't transmit during the reception of the control zone. The control zone is received by the peripherals after a period of time that depends on the distance of the peripheral to the master. This delay is called trip delay TD. In the second row of **fig.5** the upstream frame, received at the master, is depicted. The upstream frame is received by the master after a return delay TD equal to the trip delay TD. Considering the first two rows, the beginning of the upstream frame is shifted from the start of the downstream frame by a frame offset FO inclusive of the round-trip delay 2TD. The frame offset FO is set by the master and communicated to all the peripherals by proper messages. In practice, the master during an initial ranging step evaluates the trip delay TD of each peripheral station and transmits to the peripherals dedicated messages inclusive of the individual trip delay TD. Each peripheral, upon reception of the frame offset FO and the value of its trip delay TD, provides to delay the transmission frames from the received frames by a value equal to: FO - 2TD in order to set the correct frame offset FO at the master. The block MTG in the master and PTG in the peripherals generate the relevant timing. The first two rows of **fig.5** are, in practice, the situation of reception of the downstream, and transmission of the upstream, of a peripheral station that is very close to the master station (assuming the delay TD for this peripheral is quite zero).

In the third row of **fig.5** the downstream frame, received at the further peripheral station, is depicted. Considering a maximum distance, between peripherals and master station, of 8 km, the maximum propagation delay TD is approximately 30 µs. So, the downstream frame is received in an interval from 0 µs (by the closest peripheral) to 30 µs (by the furthest peripheral). The value of the frame offset FO, in a preferred embodiment of the present invention, is set to 0.6875 ms (11 / 16 of the frame length). The traffic for H-FDD peripheral stations is allocated immediately after the control zone, until the first half of the frame is full, as shown in the third row. The traffic from H-FDD peripheral stations is allocated in the first quarter of the upstream frame, as shown in the fourth row. In this way, it's ensured that an H-FDD peripheral cannot transmit and receive at the same time, independently from the distance from the master. It's ensured also that the H-FDD peripheral has time to switch from reception to transmission. The closest peripheral has 62.5 µs to switch from transmission to reception, and the farthest peripheral has 127.5 µs to switch from reception to transmission. The given numerical values are not mandatory and some considerations are needed to guide the network operator to set up the frame offset correctly. Generally speaking, the frame offset FO can be set in a range between a minimum and a maximum value. The lower limit for FO is given by: (CZL + HST_{MIN}), where: CZL is the length of the control zone, and HST_{MIN} is the minimum length of the H-FDD scheduling zone. The upper limit for the frame offset FO is given by: (FRL - HST_{MIN}), where FRL is the frame length. The length of the H-FDD scheduling zone is reasonably increased proportionally to the ratio between the number of half and full-duplex peripherals connected to the same master. The upper limit for the length of the H-FDD scheduling zone is given by: ½ (FRL - CZL - TR/X), where TR/X is the minimum allowed switching time from reception to transmission.

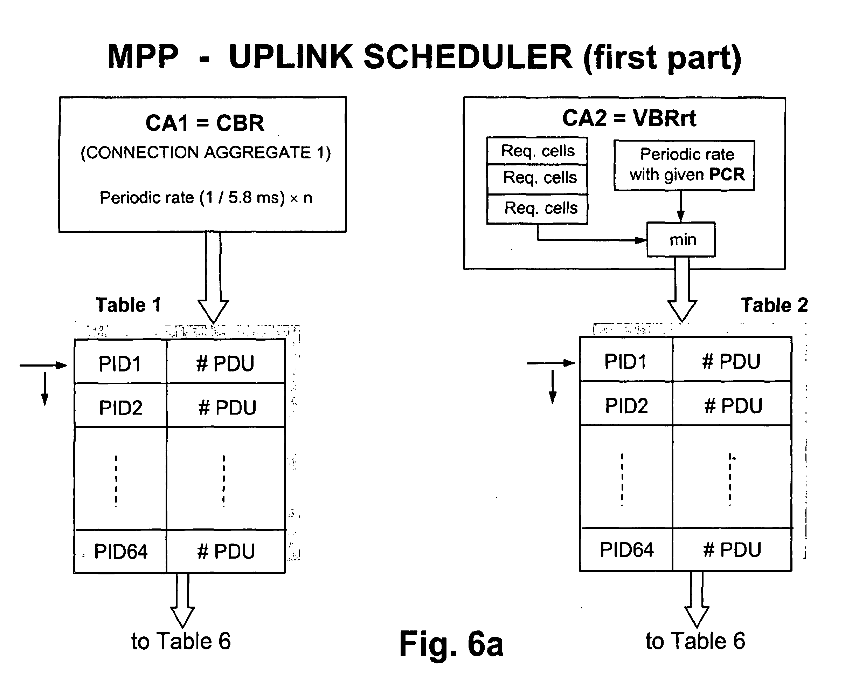

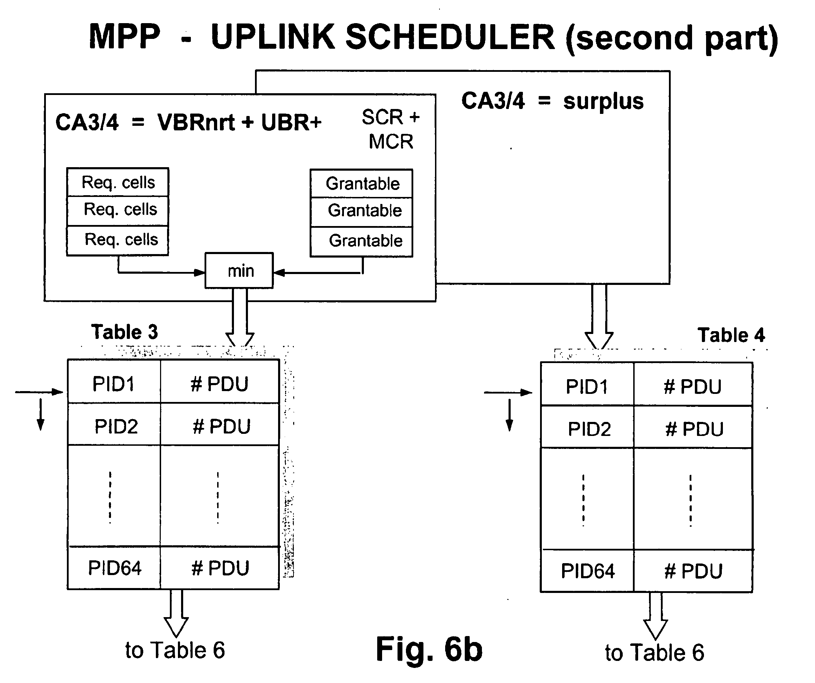

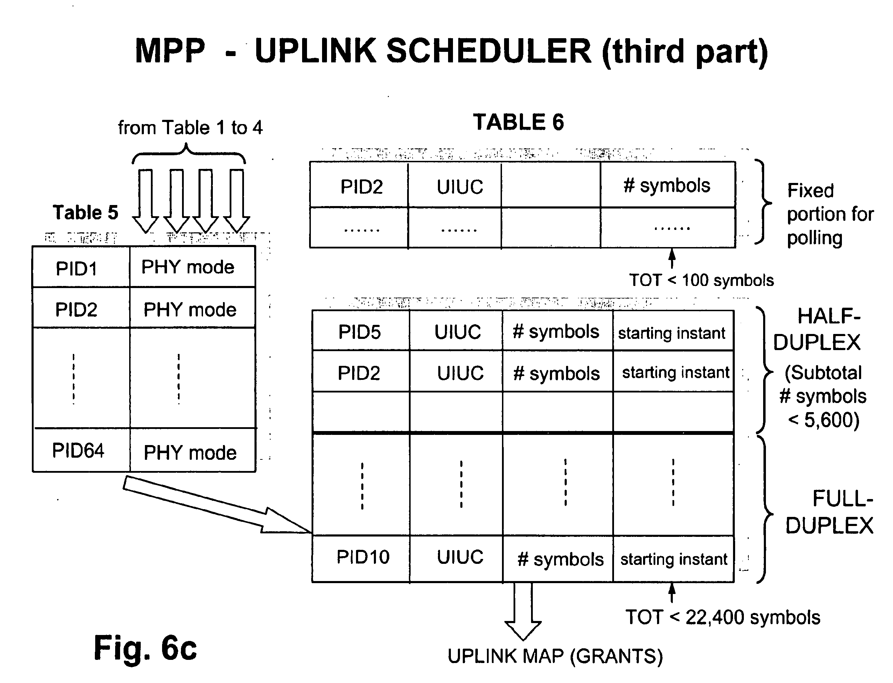

Now, with reference to the **figures 6a, 6b,** and **6c**, the operation of the upstream scheduler USC is described. This scheduler is capable to operate independently of total channel capacity (from a minimum of 10 Mb/s to a maximum of 150 Mb/s). The upstream scheduler is based on three modules CA1, CA2, CA3/4, plus a common part:
- the first module CA1, visible in **fig.6a,** represents traffic belonging to connection aggregate PRT (CBR ATM class of service), which originates a **Table 1;**
- the second module CA2, also visible in **fig.6a,** refers to the connection aggregate RT (VBRrt), which originates a **Table 2;**
- the third module CA3/4, visible in **fig.6b,** refers to the connection aggregates nRT and BE (VBRnrt and UBR+), which originate **Table 3** and **4,** respectively;
- the common part, visible in **fig.6c,** includes a **Table 5** relevant to the PHY mode operation of the peripherals, and a summarizing **Table 6** which represents the uplink map scanned for issuing the grants to the peripherals.

With reference to **fig.6a,** left part, the first module CA1 only includes information of the number "n" of 64 kbit/s channels that the Master station has to provide to every peripheral station. This because CBR traffic is fixedly scheduled without bandwidth requests from the peripherals. In **Table 1** the information of above is translated into the number of PDUs per frame the peripheral shall transmit. Table 1 has room for 64 peripherals (rows) addressed by their peripheral identifiers PID1,.....,PID64. Depending of the value of "n", the master station periodically sends to every peripheral a grant for the transmission of the needed number of PDUs for every single frame. The calculation of the periodicity is a little bit over-dimensioned and it's based, for a 64 kbit/s flow, on one ATM cell every 5.8 ms. As a result, for n=1, the master station sends grants for 5 PDUs every 29 frames, as equi-spaced as possible. For n = 2 the master shall grant 10 PDUs every 29 frames.

With reference to **fig.6a,** right part, the module CA2 includes a list of transmission requests from the peripheral stations to which calculate a minimum granting value for each peripheral. In **Table 2** this information is translated into the number of PDUs per frame the peripheral shall transmit. Table 2 has room for 64 peripherals (rows) addressed by their peripheral identifiers PID1,.....,PID64. The minimum granting value is determined by a trade-off between the requested bandwidth and the peak cell rate (PCR) granted for VBRrt traffic. For every peripheral the master station has the information of the cumulative number of PDUs in the queue for all the VBRrt connections of the peripheral (requested cells). This queue status is updated in real time with the bandwidth request mechanisms (polling, piggyback, poll-me bit) described above. Moreover the master station has the value of PCR (PDUs per second) that it shall grant for each peripheral station. This is translated, as the CBR case, in the number of theoretical PDUs the master shall grant for each frame, which are calculated on periodical basis, exactly as the module 1 case. The master sends to every peripheral a grant for the transmission of a number of PDUs that is the minimum value between the requested PDUs and the number of PDUs calculated on the basis of PCR. This method ensure the PCR for each peripheral station, but if the peripheral in a given frame has no PDUs in the queue to fill the PCR rate, the bandwidth is not allocated for that peripheral. This method saves the bandwidth from the sustainable cell rate (SCR) to the PCR, granting in any case the PCR. For example, if, from the PCR value, the master has to sends one grant for one PDU in each frame to a peripheral, and that peripheral has requested 250 PDUs, the master gives a grant for only one PDU in every frame. Vice versa, if the master has to give one grant for three PDUs, from the value of the PCR, in every frame but the peripheral has requested only two PDUs, the master sends a grant for only two PDUs in every frame. The opportunity to transmit that one PDU not granted is lost. Once the grants are released, the value of the requested PDUs is not updated, since it will be updated with the first upstream PDU via piggybacking within 2 ms.

With reference to **fig.6b**, the module CA3/4 is divided in two sub-modules. The first sub-module (in foreground) includes a list of transmission requests from the peripheral stations to which calculate a minimum granting value for each peripheral on the basis of the content of a counter corresponding to a "Grantable" field. In **Table 3** this information is translated into the number of PDUs per frame the peripheral shall transmit. Table 3 has room for 64 peripherals (rows) addressed by their peripheral identifiers PID1,.....,PID64. The first sub-module for VBRnrt differs to the CA2 module for VBRrt for the scheduling part that is based not on the theoretical granted PDU number of the PCR, but on the "Grantable" content of the counter that is increased every frame, and decreased once a grant is assigned. The incremental value is calculated by the sum of the SCR and the minimum cell rate (MCR), of all the VBRnrt and UBR+ connections of the peripheral station. For example, if a peripheral has a value of SCR plus MCR of 5 PDUs per frame, the grantable value is increased by 5 at every frame. This field is decremented when the peripheral receives grants for the transmission depending on the requested PDU number. The number of granted PDUs that the peripheral receives is equal to the minimum value between the requested PDUs and the value of "grantable" field. The size of the "grantable" counting value defines the maximum burst size that the peripheral can accumulate, as a consequence of a long period of silence. This counting value cannot be too long but it has to guarantee SCR.

The second sub-module (in background) represents traffic exceeding the minimum granted one; the surplus only refers to the number of requested ATM cells by the peripherals. The master station assigns, with low priority, as many PDUs as requested by the peripheral without the control of fairness among peripherals. In **Table 4** this information is translated into the number of PDUs per frame the peripheral shall transmit. Table 4 has room for 64 peripherals (rows) addressed by their peripheral identifiers PID1,.....,PID64.

With reference to **fig.6c** (left part) the PHY mode **Table 5** receives inputs from Tables 1 to 4 and outputs information to **Table 6. Table 5** has room for 64 peripherals (rows) addressed by their peripheral identifiers PID1,.....,PID64. Every peripheral identifier PID# is associated to: a field "PHY mode" that is the actual PHY mode that peripheral shall transmit; a field that indicates the type of duplexing mode either half or full duplex; **Table 6** is built up row-by-row, following the row-by-row scanning of the four tables 1 to 4 carried out by the processor MMP, using the information from Table 5 to derive the number of symbols to be transmitted descending from the conversion of the number of granted PDUs, i.e.: the number of PDUs that the peripheral has to transmit stored in Tables 1 to 4. During this scanning process the number of symbols are stored into **Table 6**.

With reference to **fig.6c** (right part) **Table 6**, that stores the uplink scheduling map, is depicted. **Table 6** is top-down partitioned into three sub-tables: the top one is a fixed part of table reserved to the grants for periodically polling the peripherals, as indicated in **fig.2**; the part immediately below is devoted to grant the half-duplex peripherals H-FDD; and finally the bottom part is devoted to grant the full-duplex peripherals. **Table 6** has four columns and a variable number of rows. The columns represent in the order: Peripheral Identifiers PID#; Uplink Interval Usage Code UIUC; the equivalent number of symbols for the given PHY mode coming from **Table 5;** and the starting instant of the transmission. The **UIUC** specifies to the granted peripheral the PHY mode used for the transmission, and the burst type (initialisation burst, message burst, contention burst, etc.).

In the operation, from the three modules CA1, CA2, and CA3/4 the number of PDUs to be granted are calculated, for every frame, for every peripheral. These values are grouped per class of traffic, and so per priority, for every peripheral station and inserted in the four **Tables 1** to **4**. These tables are scanned row-by-row in order of priority: first of all **Table 1** completely (PID1 to 64), than **Table 2** (idem), than **Table 3** (idem), and at last **Table 4** (idem), filling the frame of **Table 6,** with the help of **Table 5,** until there is available space. The number of grantable modulation symbols within a frame is 22,400. Finally only one grant is sent to the peripheral to transmit the cumulative traffic of the 4 tables from 1 to 4. Thus, once a peripheral is inserted in **Table 6** for a specific class of traffic, the PDUs from other classes of traffic are summed to that just present in the table and the number of symbols is re-calculated and the starting instants too. During this process, if the frame is filled, the scanning is interrupted. It will restart from Table 1 in the following frame, from the point it was interrupted. Pointers are associated to Table 1 to 4 for supporting the scan. Two examples are useful to better understand the scanning process. In the first case when frame 1 is scanned and the 22,400 symbols are completed at PID5, the scan restarts from PID6 of Table 1 at frame 2. In the second case Table 1 is completely scanned at frame 1, Table 2 too, in Table 3 the scan is completed at PID10. The scan restarts from PID1 of Table 1 at frame 2. Tables 1 and 2 are completely scanned at frame 2 without the 22,400 symbols are reached, so as the Table 3 is scanned starting from PID11; and so on.

As above said, **Table 6** is formed by the first fixed part, represented by the grants for short bursts used for replying to the polling. Short signalling PDUs, in short bursts, are transmitted by the peripherals with the most robust PHY mode if the addressed peripheral has no traffic in that frame. Otherwise the short PDUs are transmitted with the PHY mode of the traffic of the addressed peripheral, but always scheduled at the beginning of the upstream frame. This first fixed part reserves space for three short bursts (polling of three peripherals as shown in **fig.2**) and sometimes four (polling plus measurement report). The reserved space usually doesn't exceed 100 symbols. The grants for traffic addressed to H-FDD peripherals follow in **Table 6**. Making reference to the numerical example that supports **fig.5,** this traffic shall be scheduled in the first quarter of the upstream frame. In this case the total number of symbols transmitted by H-FDD peripherals, in the same frame, shall not be more than 5,600 (one quarter of the frame). If during the scanning of the four Tables from 1 to 4 this number is reached, the residual granted PDUs for the scanned peripheral are not released, i.e.: neither inserted in Table 6 nor sent to the peripheral in the immediately successive frame but, if it will be enough space, in the following one. So the residual PDUs remain in Table 1 to 4 and the new granted PDUs in the current granting are summed up to the old residual ones. Furthermore, when during the current scheduling frame the 5,600 symbols are reached, the pointer of the scanning process skips all the remaining H-FDD peripheral identifiers (PID #) and it starts the scanning at the first full-duplex peripheral. The other H-FDD peripherals will be served at the next cycle. The granted PDUs for all the other full-duplex peripherals follow in **Table 6**. The total number of symbols shall not exceed 22,400. If, during the scanning of the four Tables 1 to 4, this number is reached, the residual granted PDUs for the scanned peripheral are not released, i.e.: neither inserted in Table 6 nor sent to the peripheral in the immediately successive frame but, if it will be enough space, in the following one. So the residual PDUs remain in Table 1 to 4 and the new granted PDUs are summed up to the residual ones.

In **Table 5** the half-duplex and full-duplex peripherals are mixed together depending on their random allocation inside PID1 to PID64. In **Table 6** they are separately allocated in the relevant parts. Inside each part, the rows (PID#) are sorted by extrapolating the sequential order they had in **Table 5.** The sequential order of the rows in **Table 6** also reflects the temporal order of the transmissions from the addressed peripherals (PID#). As an immediate consequence the values of the fields "starting instant of transmission" expressed in number of symbols are increasing from one raw to the successive until the maximum value is reached. Operatively, the master station builds up the next downstream frame by scanning **Table 6** row-by-row (with the exception of the redundant information "# symbols") and the readings are stored in the assigned segment of the control zone of the frame, sequentially. Each stored row constitutes a grant message to be issued in the uplink frame. All the peripheral stations shall read the control zone sequentially for understanding the starting point/s and the duration of their transmission/s in the current uplink frame, delayed from the downlink for a time FO-2TD. The length of the transmission is determined by the peripheral station through a simple subtraction of the starting instant included in its own grant message from the staring instant of the grant message immediately successive relevant to another peripheral station. So doing the transmission of redundant information are prevented.

## Claims

1. Method for medium access control in radio systems having a centralized Master Station (MS) connected to a plurality of Peripheral Stations (PS), either half-duplex or full-duplex, with adaptive PHY mode capacity, through a downstream channel (DL) divided in frequency from an upstream channel (UL) both subdivided in frames of the same duration, and the upstream channel (UL) being shared among all the Peripheral Stations (PS) enabled, in turn, to transmit upon reception of individual permissions of transmission, called grants, scheduled by the master station for complying with the instantaneous traffic conditions either static or dynamically determined by the filling status of queues inside the Peripheral Stations (PS) associated to different connection aggregates (CA1, CA2, CA3/4) with different priority of service (CBR, VBRrt, VBRnrt, UBR+), including the step of
- transmitting control information about downstream and upstream transmission scheduling to all peripheral stations (PS) within an initial part of the downstream frames (DL) that comprises only control information;
**characterised in that** the method further includes the steps of:
- transmitting traffic data addressed to the only half-duplex peripheral stations (PS) within a second part of the downstream frames (DL) immediately following said initial control part, the second part comprising only traffic data addressed to the half-duplex peripheral stations (PS);
- transmitting traffic data addressed to the only full-duplex peripheral stations (PS) within the remaining part of the downstream frames (DL);
- scheduling the upstream transmissions of the half-duplex peripheral stations (PS) so that these are carried out just from the beginning of the upstream frames (UL) within an initial part of variable length comprising only traffic data from the half-duplex peripheral stations (PS);
- scheduling the upstream transmissions of the full-duplex peripheral stations (PS) so that these are carried out in the remaining part of the upstream frames (UL);
- commanding all the peripheral stations (PS) to introduce a given offset (FO) to the start of the upstream frames (UL) from the downstream frames (DL) such that said initial part of the upstream frames (UL) doesn't overlap in time said initial and second part of the downstream frames (DL).

2. The method of the preceding claim, **characterised in that** the maximum length of said initial part of the upstream frames is set proportionally to the amount of half-duplex peripherals and their traffic capacity, with respect to the amount and capacity of the full-duplex peripherals connected to the master station (MS).

3. The method of claim 1 or 2, **characterised in that** it includes the steps of:
- calculating in the current frame the needed bandwidth for all the active peripherals for each connection aggregate (CA1, CA2, CA3/4) and storing the results for each aggregate in a respective priority memory (Table1, 2, 3, 4) ;
- scanning, in turn, the priority memories by peripheral and by decreasing priority (Table1, 2, 3, 4) and accumulating the readings relevant to the same peripheral into an upstream memory map (Table 6), obtaining cumulative grants valid for the next frame expressed as the number of modulation symbols with the commanded PHY mode; the scan being suspended at any time during the current frame when the whole granted symbols achieves the maximum permissible for a frame.

4. The method of the preceding claim, **characterised in that** said upstream memory map (Table 6) includes:
- an initial portion to store a given number of grants destined to the polling of the peripheral stations (PS) to have back respective transmission requests (n, Req. cells) relevant to said connection aggregates (CA1, CA2, CA3/4);
- a contiguous portion to store grants for half-duplex peripheral stations (PS) spanning a cumulative number of symbols either enough for all the active half-duplex peripheral stations (PS) or equal to said maximum length of the initial part of the upstream frames;
- another contiguous portion to store grants for full-duplex peripheral stations (PS) spanning a cumulative number of symbols either enough for granting all the active full-duplex peripheral stations (PS) or equal to the maximum length of the frames.

5. The method of claim 3 or 4, **characterised in that** the peripheral station (PS) upon the reception of a grant message schedules the order of transmission from its internal queues belonging to said connection aggregates with different transmission priority (CA1, CA2, CA3/4).

6. Point-to-multipoint radio system for operating in accordance with the method of claim 1, the system having a centralized Master Station (MS) connected to a plurality of Peripheral Stations (PS), either half-duplex or full-duplex, with adaptive PHY mode capacity, through a downstream channel (DL) divided in frequency from an upstream channel (UL) both subdivided in frames of the same duration, and the upstream channel (UL) being shared among all the Peripheral Stations (PS) enabled, in turn, to transmit upon reception of individual permissions of transmission, called grants, scheduled by the master station for complying with the instantaneous traffic conditions either static or dynamically determined by the filling status of queues inside the Peripheral Stations (PS) associated to different connection aggregates (CA1, CA2, CA3/4) with different priority of service (CBR, VBRrt, VBRnrt, UBR+), and the master station (MS) includes means (MMP, USC, RU)for:
- broadcasting control information about downstream and upstream transmission scheduling to all peripheral stations (PS) within an initial part of the downstream frames (DL) that comprises only control information;
**characterised in that** the master station (MS) further includes means for:
- transmitting (RU, BB PROC) traffic data addressed to the only half-duplex peripheral stations (PS) within a second part of the downstream frames (DL) immediately following said initial control part, the second part comprising only traffic data addressed to the half-duplex peripheral stations (PS);
- transmitting traffic data addressed to the only full-duplex peripheral stations (PS) within the remaining part of the downstream frames (DL);
- scheduling (MMP, USC) the upstream transmissions of the half-duplex peripheral stations (PS) so that are these carried out just from the beginning of the upstream frames (UL) within an initial part of variable length comprising only traffic data from the half-duplex peripheral stations (PS);
- scheduling the upstream transmissions of the full-duplex peripheral stations (PS) so that these are carried out in the remaining part of the upstream frames (UL);
- commanding (MTG, BB PROC) all the peripheral stations (PS, PTG) to introduce a given offset (FO) to the start of the upstream frames (UL) from the downstream frames (DL) such that said initial part of the upstream frames (UL) doesn't overlap in time said initial and second part of the downstream frames (DL).

7. The system of the preceding claim, **characterised in that** the maximum length of said initial part of the upstream frames is set proportionally to the amount of the half-duplex peripherals (PS), and their traffic capacity, with respect to the amount and capacity of the full-duplex peripherals (PS) connected to the master station (MS).

8. The system of claim 6 or 7, **characterised in that** the master station (MS) is comprised of scheduling means (MMP, USC) including individual scheduling modules (CA1, CA2, CA3/4) for calculating for every peripheral stations (PS) for every connection aggregates (CA1, CA2, CA3/4) with different quality of service (CBR, VBRrt, VBRnrt, UBR+) the bandwidth grantable during the next frame, each module being connected to a respective priority memory (Table1, 2, 3, 4) for storing the results.

9. The system of the preceding claim, **characterised in that** said scheduling means (MMP, USC) is arranged for scanning with frame cadence the priority memories (Table1, 2, 3, 4) in order of decreasing priority for accumulating into an upstream memory map (Table 6) the readings relevant to the same peripheral expressed as the number of modulation symbols with the commanded PHY mode, checking at every step whether the maximum permissible number of symbols of the frame is achieved in order to suspend the scan.

10. The system of the preceding claim, **characterised in that** said scheduling means (MMP, USC) is arranged for scanning with frame cadence said upstream memory map (Table 6) to read out the cumulative bandwidths of the peripherals and associating unique grants.

11. The system of the preceding claim, **characterised in that** said upstream memory map (Table 6) includes:
- an initial portion to store a given number of grants for polling the Peripheral Stations (PS) to have back respective transmission requests (n, Req. cells) relevant to said connection aggregates (CA1, CA2, CA3/4);
- a contiguous portion to store grants for half-duplex peripheral stations (PS) spanning a cumulative number of symbols either enough for all the active half-duplex peripheral stations (PS) or equal to said maximum length of the initial part of the upstream frames;
- another contiguous portion to store grants for full-duplex peripheral stations (PS) spanning a cumulative number of symbols either enough for granting all the active full-duplex peripheral stations (PS) or equal to the maximum length of the frames.

12. The system of claim 8, **characterised in that** the peripheral station (PS) includes buffer means (PBF) to store relevant internal queues belonging to connection aggregates (CA1, CA2, CA3/4) with different transmission priority, and means (RU) for transmitting to the master station (MS) one or more requests of transmission from said internal queues.

13. The system of the preceding claim, **characterised in that** the peripheral station (PS) includes scheduling means (MPP, PSC) for commanding the sequence of transmission from internal queues (PBF) storing said connection aggregates with different transmission priority (CA1, CA2, CA3/4) upon the reception of a grant message from the master station (MS).

## Patentansprüche

1. Verfahren zur Medienzugangssteuerung in Funksystemen mit einer zentralen Hauptstation (MS), die über einen Abwärtskanal (DL) mit einer Vielzahl von Halbduplex- oder Vollduplex-Peripheriestationen (PS) mit adaptiver PHY-Modusfähigkeit verbunden ist, frequenzgeteilt von einem Aufwärtskanal (UL), wobei beide Kanäle in Rahmen von gleicher Dauer unterteilt sind, und wobei der von allen Peripheriestationen (PS) genutzte Aufwärtskanal (UL) aktivierbar ist, um bei Empfang einzelner Übertragungsgenehmigungen, die als Genehmigungen bezeichnet werden, zu senden, wie von der Hauptstation terminiert, um die momentanen Verkehrsbedingungen zu erfüllen, die entweder statisch oder dynamisch über den Füllstatus der Warteschlangen in den Peripheriestationen (PS) ermittelt werden, die verschiedenen Verbindungsgruppen (CA1, CA2, CA3/4) mit unterschiedlicher Servicepriorität CBR, VBRrt, VBRnrt, UBR+) zugeordnet sind, einschließlich des folgenden Schrittes:
- Übertragen der Steuerungsinformationen bezüglich der Terminierung der Abwärts- und Aufwärtsübertragung an alle Peripheriestationen (PS) in einem Anfangsteil der Abwärtsrahmen (DL), der nur Steuerinformationen umfasst; **dadurch gekennzeichnet, dass** das Verfahren zudem folgende Schritte umfasst:
- Übertragen der nur an die Halbduplex-Peripheriestationen (PS) adressierten Verkehrsdaten in einem zweiten Teil der Abwärtsrahmen (DL) unmittelbar nach dem Anfangsteil mit den Steuerinformationen, wobei der zweite Teil nur die an die Halbduplex-Peripheriestationen (PS) adressierten Verkehrsdaten umfasst;
- Übertragen der nur an die Vollduplex-Peripheriestationen (PS) adressierten Verkehrsdaten in dem verbleibenden Teil der Abwärtsrahmen (DL);
- Terminierung der Aufwärtsübertragungen der Halbduplex-Peripheriestationen (PS), so dass diese unmittelbar mit Beginn der Aufwärtsrahmen (UL) in einem Anfangsteil von variabler Länge ausgeführt werden, der nur Verkehrsdaten aus den Halbduplex-Peripheriestationen (PS) umfasst;
- Terminierung der Aufwärtsübertragungen der Vollduplex-Peripheriestationen (PS), so dass diese in dem verbleibenden Teil der Aufwärtsrahmen (UL) ausgeführt werden;
- Anweisung aller Peripheriestationen (PS), einen gegebenen Versatz (FO) zwischen dem Start der Aufwärtsrahmen (UL) und den Abwärtsrahmen (DL) einzubringen, damit der Anfangsteil der Aufwärtsrahmen (UL) den Anfangs- und zweiten Teil der Abwärtsrahmen (DL) zeitlich nicht überlagert.

2. Verfahren nach dem vorausgehenden Anspruch, **dadurch gekennzeichnet, dass** die maximale Länge des Anfangsteils der Aufwärtsrahmen proportional zur Menge der Halbduplex-Peripheriestationen und ihrer Verkehrskapazität eingestellt ist, und zwar in Bezug zur Menge und Kapazität der Vollduplex-Peripheriestationen, die mit der Hauptstation (MS) verbunden sind.

3. Verfahren nach Anspruch 1 oder 2, **dadurch gekennzeichnet, dass** es folgende Schritte umfasst:
- Berechnen im aktuellen Rahmen der notwendigen Bandbreite für alle aktiven Peripheriegeräte für jede Verbindungsgruppe (CA1, CA2, CA3/4) und Speichern der Ergebnisse für jede Gruppe in einem entsprechenden Prioritätsspeicher (Tabelle 1, 2, 3, 4,);
- Abtasten der Prioritätsspeicher nach Peripheriestation und abnehmender Priorität (Tabelle 1, 2, 3, 4) und Kumulieren der ausgelesenen Daten bezüglich derselben Peripheriestation in einer Aufwärtsspeichertabelle (Tabelle 6), Beziehen kumulativer Genehmigungen, die für den nächsten Rahmen gültig sind, ausgedrückt als die Anzahl der Modulationssymbole mit dem angewiesenen PHY-Modus; wobei die Abtastung jederzeit während des aktuellen Rahmens ausgesetzt wird, wenn die gesamten genehmigten Symbole das zulässige Maximum für einen Rahmen erreichen.

4. Verfahren nach dem vorausgehenden Anspruch, **dadurch gekennzeichnet, dass** die besagte Aufwärtsspeichertabelle (Tabelle 6) Folgendes enthält:
- einen Anfangsteil zur Speicherung einer gegebenen Anzahl von Genehmigungen, die für die Abfrage der Peripheriestationen (PS) vorgesehen sind, um entsprechende Übertragungsanfragen zurückzuerhalten (n, Req. cells), die die Verbindungsgruppen (CA1, CA2, CA3/4) betreffen;
- einen benachbarten Teil zur Speicherung von Genehmigungen für Halbduplex-Peripheriestationen (PS), die eine kumulative Anzahl von Symbolen umspannen, die entweder für alle aktiven Halbduplex-Peripheriestationen (PS) ausreichen oder gleich der maximalen Länge des Anfangsteils der Aufwärtsrahmen sind;
- einen weiteren benachbarten Teil zur Speicherung von Genehmigungen für Vollduplex-Peripheriestationen (PS), die eine kumulative Anzahl von Symbolen umspannen, die entweder für alle aktiven Vollduplex-Peripheriestationen (PS) ausreichen oder gleich der maximalen Länge der Rahmen sind.

5. Verfahren nach Anspruch 3 oder 4, **dadurch gekennzeichnet, dass** die Peripheriestation (PS) bei Empfang einer Genehmigungsmitteilung die Reihenfolge der Übertragung aus ihren internen Warteschlangen, die den besagten Verbindungsgruppen zugeordnet sind, mit unterschiedlicher Übertragungspriorität (CA1, CA2, CA3/4) terminiert.

6. Punkt-zu-Multipunkt-Funksystem für den Betrieb gemäß dem Verfahren nach Anspruch 1, wobei das System eine zentrale Hauptstation (MS) umfasst, die über einen Abwärtskanal (DL) mit einer Vielzahl von Halbduplex- oder Vollduplex-Peripheriestationen (PS) mit adaptiver PHY-Modusfähigkeit verbunden ist, frequenzgeteilt von einem Aufwärtskanal (UL), wobei beide in Rahmen von gleicher Dauer unterteilt sind, und wobei der von allen Peripheriestationen (PS) genutzte Aufwärtskanal (UL) aktivierbar ist, um bei Empfang einzelner Übertragungsgenehmigungen, die als Genehmigungen bezeichnet werden, zu senden, wie von der Hauptstation terminiert, um die momentanen Verkehrsbedingungen zu erfüllen, die entweder statisch oder dynamisch über den Füllstatus der Warteschlangen in den Peripheriestationen (PS) ermittelt werden, die verschiedenen Verbindungsgruppen (CA1, CA2, CA3/4) mit unterschiedlicher Servivepriorität (CBR, VBRrt, VBRnrt, UBR+) zugeordnet sind, und wobei die Hauptstation (MS) Mittel (MMP, USC, RU) umfasst für:
- Rundsenden der Steuerungsinformationen bezüglich der Terminierung der Abwärts- und Aufwärtsübertragung an alle Peripheriestationen (PS) in einem Anfangsteil der Abwärtsrahmen (DL), der nur Steuerinformationen umfasst; **dadurch gekennzeichnet, dass** die Hauptstation (MS) zudem Mittel umfasst zum:
- Übertragen (RU, BB PROC) der nur an die Halbduplex-Peripheriestationen (PS) adressierten Verkehrsdaten in einem zweiten Teil der Abwärtsrahmen (DL) unmittelbar nach dem Anfangsteil mit den Steuerinformationen, wobei der zweite Teil nur die an die Halbduplex-Peripheriestationen (PS) adressierten Verkehrsdaten umfasst;
- Übertragen der nur an die Vollduplex-Peripheriestationen (PS) adressierten Verkehrsdaten in dem verbleibenden Teil der Abwärtsrahmen (DL);
- Terminieren (MMP, USC) der Aufwärtsübertragungen der Halbduplex-Peripheriestationen (PS), so dass diese unmittelbar mit Beginn der Aufwärtsrahmen (UL) in einem Anfangsteil von variabler Länge ausgeführt werden, der nur Verkehrsdaten aus den Halbduplex-Peripheriestationen (PS) umfasst;
- Terminieren der Aufwärtsübertragungen der vollduplex-Peripheriestationen (PS), so dass diese in dem verbleibenden Teil der Aufwärtsrahmen (UL) ausgeführt werden;
- Anweisen (MTG, BB PROC) aller Peripheriestationen (PS, PTG), einen gegebenen Versatz (FO) zwischen dem Start der Aufwärtsrahmen (UL) und den Abwärtsrahmen (DL) einzubringen, damit der Anfangsteil der Aufwärtsrahmen (UL) den Anfangs- und zweiten Teil der Abwärtsrahmen (DL) zeitlich nicht überlagert.

7. System nach dem vorausgehenden Anspruch, **dadurch gekennzeichnet, dass** die maximale Länge des Anfangsteils der Aufwärtsrahmen proportional zur Menge der Halbduplex-Peripheriestationen (PS) und ihrer Verkehrskapazität eingestellt ist, und zwar in Bezug zur Menge und Kapazität der Vollduplex-Peripheriestationen (PS), die mit der Hauptstation (MS) verbunden sind.

8. System nach Anspruch 6 oder 7, **dadurch gekennzeichnet, dass** die Hauptstation (MS) Terminierungsmittel (MMP, USC) umfasst, einschließlich individueller Terminierungsmodule (CA1, CA2, CA3/4), um für jede Peripheriestation (PS) für jede Verbindungsgruppe (CA1, CA2, CA3/4) mit unterschiedlicher Servicequalität (CBR, VBRrt, VBRnrt, UBR+) die während des nächsten Rahmens zur Genehmigung möglichen Bandbreiten zu berechnen, wobei jedes Modul mit einem entsprechenden Prioritätsspeicher (Tabelle 1, 2, 3, 4) zur Speicherung der Ergebnisse verbunden ist.

9. System nach dem vorausgehenden Anspruch, **dadurch gekennzeichnet, dass** die besagten Terminierungsmittel (MMP, USC) derart angeordnet sind, dass sie die Prioritätsspeicher (Tabelle 1, 2, 3, 4) in der Reihenfolge der abnehmenden Priorität rahmengetaktet abtasten, um in einer Aufwärtsspeichertabelle (Tabelle 6) die ausgelesenen Daten zu kumulieren, die dieselbe Peripheriestation betreffen, und zwar als Anzahl der Modulationssymbole mit dem angewiesenen PHY-Modus, wobei bei jedem Schritt geprüft wird, ob die maximal zulässige Anzahl von Symbolen des Rahmens erreicht ist, um die Abtastung auszusetzen.

10. System nach dem vorausgehenden Anspruch, **dadurch gekennzeichnet, dass** die besagten Terminierungsmittel (MMP, USC) zur rahmengetakteten Abtastung der besagten Aufwärtsspeichertabelle (Tabelle 6) angeordnet sind, um die kumulativen Bandbreiten der Peripheriegeräte auszulesen und eindeutige Genehmigungen zuzuordnen.

11. System nach dem vorausgehenden Anspruch, **dadurch gekennzeichnet, dass** die besagte Aufwärtsspeichertabelle (Tabelle 6) Folgendes enthält:
- einen Anfangsteil zur Speicherung einer gegebenen Anzahl von Genehmigungen zum Abrufen der Peripheriestationen (PS), um entsprechende Übertragungsanfragen (n, Req. cells) zurückzuerhalten, die die besagten verbindungsgruppen (CA1, CA2, CA3/4) betreffen;
- einen benachbarten Teil zur Speicherung von Genehmigungen für Halbduplex-Peripheriestationen (PS), die eine kumulative Anzahl von Symbolen umspannen, die entweder für alle aktiven Halbduplex-Peripheriestationen (PS) ausreichen oder gleich der besagten maximalen Länge des Anfangsteils der Aufwärtsrahmen sind;
- einen weiteren benachbarten Teil zur Speicherung von Genehmigungen für Vollduplex-Peripheriestationen (PS), die eine kumulative Anzahl von Symbolen umspannen, die entweder für alle aktiven Vollduplex-Peripheriestationen (PS) ausreichen oder gleich der maximalen Länge der Rahmen sind.

12. System nach Anspruch 8, **dadurch gekennzeichnet, dass** die Peripheriestationen (PS) Puffermittel (PBF) umfassen, um betreffende interne Warteschlangen zu speichern, die zu Verbindungsgruppen (CA1, CA2, CA3/4) mit unterschiedlicher Übertragungspriorität gehören, und Mittel (RU) zur Übertragung einer oder mehrerer Übertragungsanfragen von den besagten internen Warteschlangen an die Hauptstation (MS).

13. Verfahren nach dem vorausgehenden Anspruch, **dadurch gekennzeichnet, dass** die Peripheriestation (PS) Terminierurzgsmittel (MPP, PSC) umfasst, um die Folge der Übertragung aus den internen Warteschlangen (PBF), die die besagten Verbindungsgruppen mit unterschiedlicher Übertragungspriorität (CA1, CA2, CA3/4) speichern, bei Empfang einer Genehmigungsmeldung von der Hauptstation (MS) anzuweisen.

## Revendications

1. Procédé de commande d'accès au support dans des systèmes radio ayant une Station Maître (MS) centralisée connectée à une pluralité de Stations Périphériques (PS), en semi-duplex ou en duplex intégral, avec une capacité de mode PHY adaptatif, par l'intermédiaire d'un canal descendant (DL) divisé en fréquence à partir d'un canal montant (UL) les deux subdivisés en trames de la même durée, et le canal montant (UL) étant partagé entre toutes les Stations Périphériques (PS) activées, chacune leur tour, pour transmettre à réception d'autorisations individuelles de transmission, appelées attributions, programmées par la station maître pour satisfaire aux conditions de trafic instantanées déterminées de façon statique ou dynamique par l'état de remplissage des files d'attente dans les Stations Périphériques (PS) associées à différents agrégats de connexion (CA1, CA2, CA3/4) avec une priorité de service différente (CBR, VBRrt, VBRnrt, UBR+), comprenant l'étape de
- transmettre les informations de commande relatives à la programmation de transmission descendante et montante à toutes les stations périphériques (PS) au sein d'une partie initiale des trames descendantes (DL) qui ne comprend que des informations de commande ;
**caractérisé en ce que** le procédé comprend en outre les étapes de :
- transmettre les données de trafic adressées aux seules stations périphériques (PS) en semi-duplex au sein d'une deuxième partie des trames descendantes (DL) suivant immédiatement ladite partie initiale de commande, la deuxième partie ne comprenant que les données de trafic adressées aux stations périphériques (PS) en semi-duplex;
- transmettre les données de trafic adressées aux seules stations périphériques (PS) en duplex intégral au sein de la partie restante des trames descendantes (DL) ;
- programmer les transmissions montantes des stations périphériques (PS) en semi-duplex de manière à ce que celles-ci soient effectuées juste à partir du début des trames montantes (UL) au sein d'une partie initiale de longueur variable ne comprenant que les données de trafic en provenance des stations périphériques (PS) en semi-duplex ;
- programmer les transmissions montantes des stations périphériques (PS) en duplex intégral de manière à ce que celles-ci soient effectuées dans la partie restante des trames montantes (UL) ;
- commander à toutes les stations périphériques (PS) d'introduire un décalage donné (FO) au début des trames montantes (UL) par rapport aux trames descendantes (DL) de manière à ce que ladite partie initiale des trames montantes (UL) ne chevauche pas dans le temps ladite partie initiale et ladite deuxième partie des trames descendantes (DL).

2. Procédé selon la revendication précédente, **caractérisé en ce que** la longueur maximum de ladite partie initiale des trames montantes est fixée proportionnellement à la quantité de périphériques en semi-duplex et à leur capacité de trafic, par rapport à la quantité et à la capacité des périphériques en duplex intégral connectés à la station maître (MS).

3. Procédé selon la revendication 1 ou 2, **caractérisé en ce qu'**il inclut les étapes de :
- Calculer dans la trame courante la largeur de bande nécessaire pour tous les périphériques actifs pour chaque agrégat de connexion (CA1, CA2, CA3/4) et stocker les résultats pour chaque agrégat dans une mémoire de priorité respective (Table1, 2, 3, 4) ;
- balayer, tour à tour, les mémoires de priorité par périphérique et par priorité décroissante (Tablel, 2, 3, 4) et accumuler les résultats relatifs au même périphérique dans une image mémoire amont (Table 6), obtenir des attributions cumulées valides pour la trame suivante exprimées en tant que nombre de symboles de modulation avec le mode PHY commande, le balayage étant interrompu à un moment quelconque pendant la trame courante lorsque la totalité des symboles attribués parvient au maximum autorisé pour une trame.

4. Procédé selon la revendication précédente, **caractérisé en ce que** ladite image mémoire amont (Table 6) inclut :
- une portion initiale pour stocker un nombre donné d'attributions destinées à l'invitation à émettre des stations périphériques (PS) de manière à avoir des demandes de transmission en retour respectives (n, Req. cells) relatives auxdits agrégats de connexion (CA1, CA2, CA3/4) ;
- une portion contiguë pour stocker les attributions pour les stations périphériques (PS) en semi-duplex couvrant un nombre cumulé de symboles soit suffisant pour toutes les stations périphériques (PS) en semi-duplex actives, soit égal à ladite longueur maximum de la partie initiale des trames montantes ;
- une autre portion contiguë pour stocker les attributions pour les stations périphériques (PS) en duplex intégral couvrant un nombre cumulé de symboles soit suffisant pour attribuer toutes les stations périphériques (PS) en duplex intégral actives, soit égal à ladite longueur maximum des trames.

5. Procédé selon la revendication 3 ou 4, **caractérisé en ce que** la station périphérique (PS) à réception d'un message d'attribution programme l'ordre de transmission à partir de ses files d'attente internes appartenant auxdits agrégats de connexion avec une priorité de transmission différente (CAl, CA2, CA3/4)

6. Système radio point à multipoint destiné à fonctionner selon le procédé de la revendication 1, le système ayant une Station Maître (MS) centralisée connectée à une pluralité de Stations Périphériques (PS), en semi-duplex ou en duplex intégral, avec une capacité de mode PHY adaptatif, par l'intermédiaire d'un canal descendant (DL) divisé en fréquence à partir d'un canal montant (UL) les deux subdivisés en trames de la même durée, et le canal montant (UL) étant partagé entre toutes les Stations Périphériques (PS) activées, chacune leur tour, pour transmettre à réception d'autorisations individuelles de transmission, appelées attributions, programmées par la station maître pour satisfaire aux conditions de trafic instantanées déterminées de façon statique ou dynamique par l'état de remplissage des files d'attente dans les Stations Périphériques (PS) associées à différents agrégats de connexion (CA1, CA2, CA3/4) avec une priorité de service différente (CBR, VBRrt, VBRnrt, UBR+) et la station maître (MS) inclut des moyens (MMP, USC, RU) pour :
- diffuser les informations de commande relatives à la programmation de transmission descendante et montante à toutes les stations périphériques (PS) au sein d'une partie initiale des trames descendantes (DL) qui ne comprend que des informations de commande ;
**caractérisé en ce que** la station maître (MS) inclut en outre des moyens pour :
- transmettre (RU, BB PROC) les données de trafic adressées aux seules stations périphériques (PS) en semi-duplex au sein d'une deuxième partie des trames descendantes (DL) suivant immédiatement ladite partie initiale de commande, la deuxième partie ne comprenant que les données de trafic adressées aux stations périphériques (PS) en semi-duplex ;
- transmettre les données de trafic adressées aux seules stations périphériques (PS) en duplex intégral au sein de la partie restante des trames descendantes (DL) ;
- programmer les transmissions montantes des stations périphériques (PS) en semi-duplex de manière à ce que celles-ci soient effectuées juste à partir du début des trames montantes (UL) au sein d'une partie initiale de longueur variable ne comprenant que les données de trafic en provenance des stations périphériques (PS) en semi-duplex ;
- programmer les transmissions montantes des stations périphériques (PS) en duplex intégral de manière à ce que celles-ci soient effectuées dans la partie restante des trames montantes (UL);
- commander (MTG, BB PROC) à toutes les stations périphériques (PS, PTG) d'introduire un décalage donné (FO) au début des trames montantes (UL) par rapport aux trames descendantes (DL) de manière à ce que ladite partie initiale des trames montantes (UL) ne chevauche pas dans le temps ladite partie initiale et ladite deuxième partie des trames descendantes (DL).

7. Système selon la revendication précédente, **caractérisé en ce que** la longueur maximum de ladite partie initiale des trames montantes est fixée proportionnellement à la quantité de périphériques (PS) en semi-duplex et à leur capacité de trafic, par rapport à la quantité et à la capacité des périphériques (PS) en duplex intégral connectés à la station maître (MS).

8. Système selon la revendication 6 ou 7, **caractérisé en ce que** la station maître comprend un moyen de programmation (MMP, USC) incluant des modules de programmation individuels (CA1, CA2, CA3/4) pour calculer pour toutes les stations périphériques (PS) pour tous les agrégats de connexion (CA1, CA2, CA3/4) avec une qualité de service différente (CBR, VBRrt, VBRnrt, UBR+) la largeur de bande attribuable pendant la trame suivante, chaque module étant connecté à une mémoire de priorité respective (Table1, 2, 3, 4) pour stocker les résultats.

9. Système selon la revendication précédente, **caractérisé en ce que** ledit moyen de programmation (MMP, USC) sont agencés de manière à balayer selon une cadence de trames les mémoires de priorité (Table1, 2, 3, 4) dans l'ordre de priorité décroissante pour accumuler dans une image mémoire amont (Table 6) les résultats relatifs au même périphérique exprimés en tant que nombre de symboles de modulation avec le mode PHY commandé, en contrôlant à chaque étape si le nombre autorisé maximum de symboles de la trame est atteint afin d'interrompre le balayage.

10. Système selon la revendication précédente, **caractérisé en ce que** ledit moyen de programmation (MMP, USC) sont agencés de manière à balayer selon une cadence de trames ladite image mémoire amont (Table 6) pour y lire les largeurs de bande cumulées des périphériques et pour associer des attributions uniques.

11. Système selon la revendication précédente, **caractérisé en ce que** ladite image mémoire amont (Table 6) inclut :
- une portion initiale pour stocker un nombre donné d'attributions destinées à l'invitation à émettre des Stations Périphériques (PS) de manière à avoir des demandes de transmission en retour respectives (n, Req. cells) relatives auxdits agrégats de connexion (CA1, CA2, CA3/4) ;
- une portion contiguë pour stocker les attributions pour les stations périphériques (PS) en semi-duplex couvrant un nombre cumulé de symboles soit suffisant pour toutes les stations périphériques (PS) en semi-duplex actives, soit égal à ladite longueur maximum de la partie initiale des trames montantes ;
- une autre portion contiguë pour stocker les attributions pour les stations périphériques (PS) en duplex intégral couvrant un nombre cumulé de symboles soit suffisant pour attribuer toutes les stations périphériques (PS) en duplex intégral actives, soit égal à ladite longueur maximum des trames.

12. Système selon la revendication 8, **caractérisé en ce que** la station périphérique (PS) inclut un moyen de mémoire tampon (PBF) pour stocker les files d'attente internes correspondantes appartenant aux agrégats de connexion (CA1, CA2, CA3/4) avec une priorité de transmission différente, et un moyen (RU) pour transmettre à la station maître (MS) une ou plusieurs demande(s) de transmission à partir desdites files d'attente internes.

13. Système selon la revendication précédente, **caractérisé en ce que** la station périphérique (PS) inclut un moyen de programmation (MMP, PSC) pour commander la séquence de transmission à partir des files d'attente internes (PBF) stockant lesdits agrégats de connexion avec une priorité de transmission différente (CA1, CA2, CA3/4) à réception d'un message d'attribution en provenance de la station maître (MS).
